(19) Europäisches Patentamt / European Patent Office / Office européen des brevets

(11) **EP 3 781 847 B1**

(12) **EUROPEAN PATENT SPECIFICATION**

(45) Date of publication and mention
of the grant of the patent:
**06.09.2023   Bulletin 2023/36**

(21) Application number: **19722212.8**

(22) Date of filing: **16.04.2019**

(51) International Patent Classification (IPC):
**F16J 15/00** (2006.01)        **F16J 15/46** (2006.01)
**F16J 15/3236** (2016.01)

(52) Cooperative Patent Classification (CPC):
**F16J 15/008; F16J 15/3236; F16J 15/46;**
B63H 2023/327

(86) International application number:
**PCT/IB2019/053113**

(87) International publication number:
**WO 2019/202490 (24.10.2019 Gazette 2019/43)**

(54) **EMERGENCY SEAL**

NOTDICHTUNG

JOINT D'ÉTANCHÉITÉ DE SECOURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2018   IT 201800004699**

(43) Date of publication of application:
**24.02.2021   Bulletin 2021/08**

(73) Proprietor: **CARCO - PRECISION RUBBER
PRODUCTS S.p.A.
20122 Milano (MI) (IT)**

(72) Inventors:
• **ROMAGNOLI, Enrico
20122 Milano (IT)**

• **LORENZI, Bruno
20122 Milano (IT)**

(74) Representative: **Tansini, Elio Fabrizio
Bugnion S.p.A.
Viale Lancetti 17
20158 Milano (IT)**

(56) References cited:
EP-A1- 3 460 297        WO-A1-2018/037918
FR-A1- 2 598 769        JP-U- S60 127 164
US-A- 2 761 709        US-A- 4 534 569
US-A- 4 541 638        US-A- 5 429 374

**Description**

The present invention relates to an emergency seal, in particular a pneumatic emergency seal for naval use.

Exemplary emergency seals are disclosed in JP S60 127164 U, US 2 761 709 A, FR 2 598 769 A1, US 4 534 569 A, US 4 676 531 A, and US 4 541 638 A. US_5429374 A1 discloses a seal member aimed to act as a lubricating diaphragm valve between a seat and a rotating shaft. WO_2018/037918 A1 provides a further example of known seal operating to prevent leakage of fluid between a shaft and a respective seat.

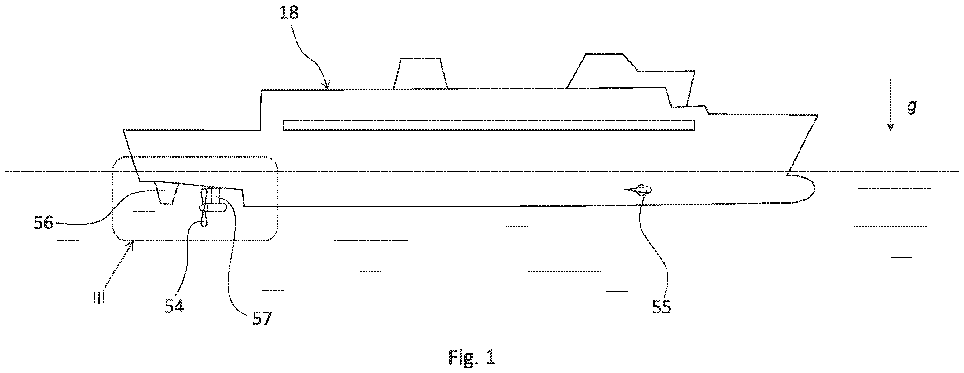

In the present prior art discussion, for greater clarity, reference will be made to the appended figures 1 to 3. In a way known in the field of shipbuilding, at the submerged movable members of a watercraft 18 seals 60 are employed for isolating an internal environment from the water that is outside. The internal environment can be contained within the actual hull of the watercraft, or within a movable member such as, for example, an azimuth pod. In the following, for the sake of brevity, the term hull will refer to the wall separating the internal environment from the external environment, meaning not only the actual hull, but also the wall of the azimuth pod, where appropriate. Some submerged movable members, mentioned herein by way of example and without any limiting purpose, can be the propellers 54, the thrusters, the movable surfaces such as for example the rudder 56 or stabilizer fins 55, if any, as well as the azimuth pods 57. These movable members share the presence, inside the hull, of mechanical driving members and of a drive shaft 50 which goes through the hull to provide motion to the movable member itself. Since in the normal operating life of the watercraft 18 the submerged movable members are surrounded by water, whereas the mechanical members are usually lubricated, a "water side" (herein referred to as $W$), corresponding to the outside of the hull, and an "oil side" (herein referred to as $O$), corresponding to the inside of the hull, are usually distinguished along the drive shaft.

The seals 60 of the known type are able to keep the separation between the oil side $O$ and the water side $W$, and thereby to ensure the proper operation of the submerged movable members, and thus the effective management and control of the watercraft. However, some serious problems arise in the event the seals break down, for example due to an excessive wear and/or an impact, or the like.

To face such case, emergency seals 61 have been developed. Usually, such seals remain in a not operating configuration throughout the normal operating life of the watercraft, and then are actuated and assume the working configuration if using them turns out to be necessary.

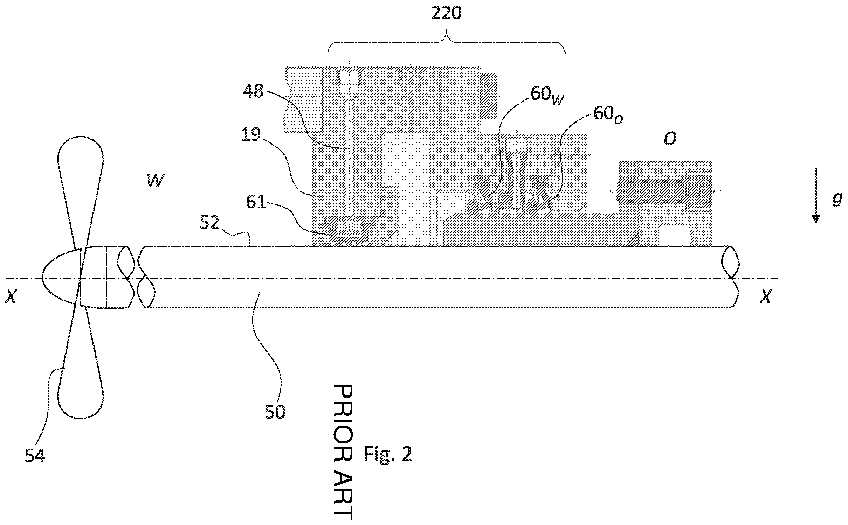

A type of such seals is illustrated in the section of figure 2, for example. As can be seen, the emergency seal 61 of the known type consists of an elastomeric tubular element defining an air chamber which can be inflated, when needed. This way, the seal 61 presses on the drive shaft 50 and prevents the fluids from flowing from the oil side O to the water side $W$ and vice versa. These seals are fixed in the respective seat and have walls with a relatively thin thickness to allow an efficient inflation.

Such emergency seals 61 can be used according to two different methods of use, but, although widely used, they have considerable disadvantages in both methods of use.

According to a first method of use, the emergency seal 61 is inflated at high pressure, so as to adhere firmly to the wall 52 of the shaft 50, thereby preventing any leakage of water or oil. The disadvantage of this first method of use is that, when the emergency seal 61 is inflated at high pressure, the drive shaft 50 on which it acts cannot be rotated. By rotating the shaft, indeed, the tubular seal would be torn off from its seat, losing immediately effectiveness. In view of this it is therefore evident to the skilled person that such use of the emergency seals allows to preserve the buoyancy of the watercraft yet it does not allow the full operability and full control of the watercraft itself. In the event the emergency seal acts on the drive shaft of the propeller 54, such actuation of the seal would mean having to do without the propulsion, basically leaving the watercraft drift while waiting for help.

In order to partially overcome this problem, a second method of use has been developed, according to which the emergency seal 61 is inflated at low pressure cannot ensure the sealing and therefore results in a continuous leakage along the shaft. In this case, it is therefore evident to the skilled person that such use of emergency seals allows to preserve the operability and control of the watercraft, while requiring, on the other hand, a quick return on a site where an extraordinary maintenance is to be carried out.

Moreover, in some configurations, such as, for example, the one in Figure 2, the emergency seal 61 of the known type is the outermost one of all seals 60 arranged on the same shaft. That is, the emergency seal is constantly exposed to water throughout the normal operating life. As the skilled person will easily understand, this exposure entails a very real risk that saline deposits, biofilm formed by bacterial colonies or algae, or even settlements of higher organisms are formed on the surface of the seal itself. The presence of such foreign elements can easily impair the operation of the emergency seal 61 which, in case of necessity, would then not be able to fulfil its task. Such an occurrence is therefore extremely dangerous, affecting the security itself of the watercraft.

Therefore, the object of the present invention is to overcome at least partially the drawbacks highlighted above in connection with the prior art. In particular, an aim of the present invention is to provide an emergency seal for a watercraft which ensures a sealing, while allowing the proper operation of the submerged movable members on which it acts.

In particular, an aim of the present invention is to provide an emergency seal which is not exposed, during the normal operating life of the watercraft, to the formation of deposits that can possibly impair its operation.

This object and these aims are achieved by an emergency seal assembly according to claim 1 and by a sealing package according to claim 8.

To better understand the invention and appreciate its advantages, some of its exemplifying and non-limiting embodiments are described below with reference to the accompanying drawings, wherein:

- figure 1 shows a lateral view of a generic watercraft comprising submerged movable members;
- figure 2 shows a partially sectional schematic view of an emergency seal according to the prior art;
- figure 3 shows an enlarged view of the detail referred to as III in Figure 1;
- figure 4 shows a sectional view of an emergency seal according to the invention, in a first configuration;
- figure 5 shows a sectional view of an emergency seal according to the invention, in a second configuration;
- figure 6.a shows an enlarged view of the detail referred to as VI in figure 5, wherein the seal is in a resting configuration;

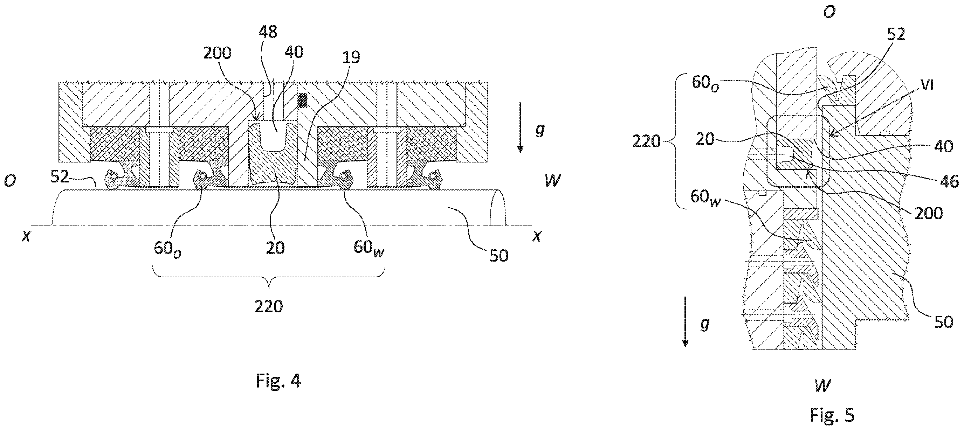

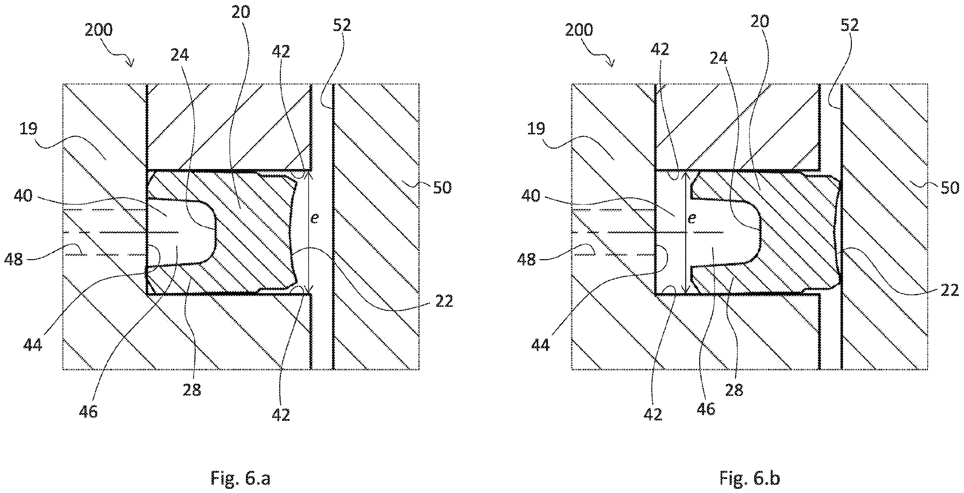

- figure 6.b shows an enlarged view of the detail referred to as VI in figure 5, wherein the seal is in a working configuration;

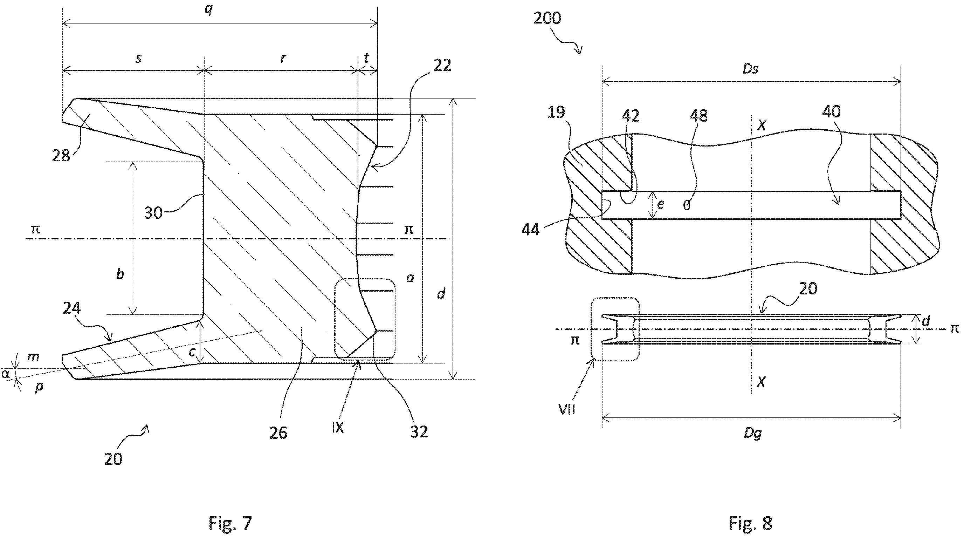

- figure 7 shows an enlarged view of the cross section of the emergency seal according to the invention, corresponding to the detail referred to as VII in figure 8;
- figure 8 shows a schematic axial sectional view of a seal assembly according to the invention;

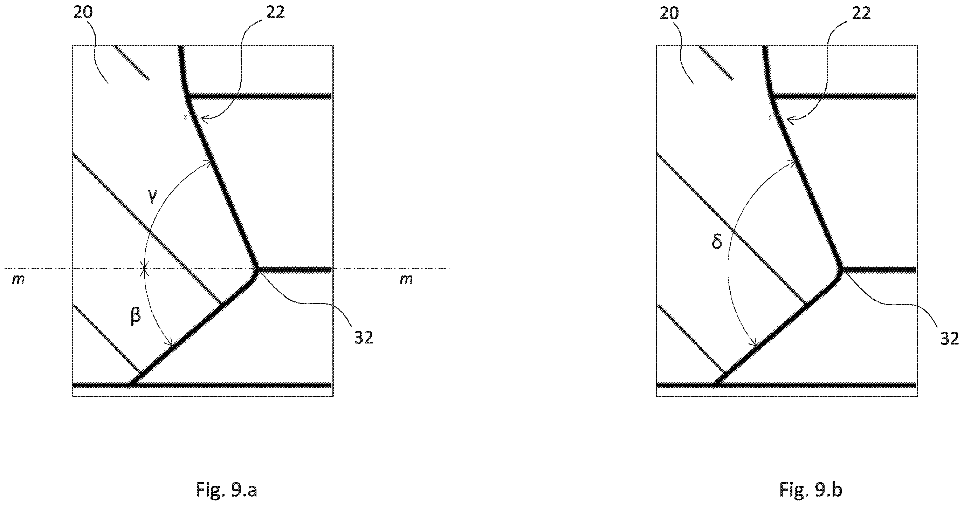

- figure 9.a shows an enlarged view of the detail referred to as IX in figure 7; and
- figure 9.b shows another enlarged view of the detail referred to as IX in figure 7.

In the context of the present discussion, some terminological conventions have been adopted in order to make reading easier and smoother. These terminological conventions are clarified below with reference to the appended figures.

As described above in relation to the prior art, the emergency seals are associated to a drive shaft. Such shaft, independently from the specific function it performs, at least locally defines an axis of rotation X. Therefore, the term 'axial' hereinafter refers to the direction of any straight line parallel to axis X; the term 'radial' hereinafter refers to the direction of any half-line perpendicular to axis X and originating on the axis itself; finally, the term 'circumferential' hereinafter refers to the direction of any circumference centred on axis X and perpendicular to the axis itself.

Since the invention is designed to be used in presence of gravitational acceleration g, it is intended that the latter uniquely defines the vertical direction. Likewise, it is understood that, based on gravity acceleration g, the terms "high", "higher", "above" and the like are defined unequivocally, with respect to the terms "low", "lower", "below" and the like.

In a first aspect thereof, the invention relates to an emergency seal 20 intended to be used on a watercraft 18. The emergency seal 20 comprises a radially inner surface 22 suitable for resting on the radially outer surface 52 of a drive shaft 50 and a radially outer surface 24 suitable for being subjected to the action of a pressure fluid. The emergency seal 20 also has a constant cross section along its own circumferential development. The cross section comprises a main solid portion 26 from which two appendices 28 depart, which have a mainly outward radial development. The radially inner surface 22 comprises at least two sealing prominences 32, and the emergency seal 20 is made of an elastomeric material.

Preferably, the elastomeric material is selected from the group comprising: ACM, FKM, CR, NBR, HNBR, SBR, XNBR, AU, and EU. The abbreviations mentioned herein are defined in the international standard ISO 1629:2013 *Rubber and latices - Nomenclature,* published by the *International Organization for Standardization.* Such abbreviations thus identify elastomers in a unique and unequivocal way. Preferably, the emergency seal 20 has a monolithic, and advantageously mono-material, structure.

In the following, the detailed description is set forth of an embodiment of the cross section of the emergency seal 20, wherein specific reference is made to Figure 7.

In the embodiment in Figure 7, the emergency seal 20 has a total radial extension q which equals the sum of the radial extension s of the two appendices 28, of the radial extension *r* of the main solid portion 26, and of the radial extension *t* of the two sealing prominences 32:

$$q = r + s + t$$

In the following, some preferential proportions between the identified dimensions are mentioned.

Preferably, the radial extension s of the two appendices 28 takes up a percentage of q in the range of 30% to 50%, i.e. this relation is applied:

$$0.3q < s < 0.5q$$

As a result, obviously, the radial extension *r+t* of the main solid portion 26 and of the two sealing prominences 32 preferably takes up a percentage of q in the range of 50% to 70%, *i.e.*, this relation is applied:

$$0.5q < (r+t) < 0.7q$$

In addition, the main solid portion 26 has an axial extension a, wherein, preferably, $a < q < 1.3a$.

Above, reference was made to the fact that the appendices 28 have a mainly outward radial development. As can be seen in figure 7, in this particular embodiment, the appendices 28 also have an axial extension, each in the direction moving away from the main solid portion 26 and from the other appendix. That is, each appendix 28 extends along a direction $p$ which forms an angle $\alpha$ with the radial direction m. Preferably, the angle $\alpha$ is in the range of 5° to 30°, even more preferably the angle $\alpha$ is in the range of 10° to 20°.

The axial development of the appendices 28 is summed to the axial extension a of the main solid portion 26, defining the overall axial extension of the emergency seal 20 $d$ in the undeformed state. As can be seen in figure 7, $d$ is greater than $a$.

Preferably, each one of the two appendices 28 has a tapered development and, in the wider area, where it departs from the main solid portion 26, has an axial extension $c$ where preferably:

$$0.09a < c < 0.28a$$

As stated, the two appendices 28 depart from the main solid portion 26. They preferably leave a radial pressure surface 30 having axial extension $b$, where $b \geq (a - 2c)$. The radial pressure surface 30 and the two appendices 28 form the radially outer surface 24.

As already stated, the radially inner surface 22 of the emergency seal 20 comprises at least two sealing prominences 32. The sealing prominences 32 are intended to provide locally a great deformability to the seal, so as to significantly improve its sealing properties. Advantageously, the sealing prominences 32 have a continuous development in the circumferential direction. The at least two sealing prominences 32 protrude radially inwards and have radial extension t.

In figure 9.a, it is shown that, for this particular embodiment, in each of the sealing prominences 32 two angles $\beta$ and $\gamma$ can be identified. In particular, the angles $\beta$ and $\gamma$ are included between the radial direction m and each of the walls forming the sealing prominence 32 itself, respectively. Preferably, at least one of the following relations applies:

$$30° < \beta < 75°$$

$$30° < \gamma < 75°$$

In figure 9.b, it is shown that, for this particular embodiment, in each of the sealing prominences 32 an

angle $\delta$ can be identified. In particular, the angle $\delta$ is comprised between the two walls forming the sealing prominence 32 itself. Preferably, the following relation applies:

$$60° < \delta < 150°$$

Preferably, a plurality of sealing prominences 32, spaced apart from each other in the axial direction and in a symmetrical manner with respect to the plane $\pi$, is provided.

In the embodiment in figures 7 and 8, the cross section of the emergency seal 20 is symmetrical with respect to an axial mid plane $\pi$ perpendicular to axis X.

According to another aspect, the invention also relates to a seal assembly 200, comprising an emergency seal 20, of the type described above, and the relative seat 40. The seal assembly 200 is described in the following with particular reference to figure 8. The seat 40 is formed in an apparatus 19 of the watercraft 18 intended to define the passage for a drive shaft 50 intended to transmit motion to a movable member mounted on the outside of the watercraft 18.

Preferably, the seat 40 comprises two side walls 42 and a bottom wall 44. For example, in the embodiment shown in the appended figures, the two side walls 42 extend in the radial and circumferential directions and generally have the shape of a circular crown (or annulus), while the bottom wall 44 extends in the axial and circumferential directions and generally has the shape of a right circular cylinder.

In the seal assembly 200 according to the invention, the outer diameter $Dg$ of the emergency seal 20 is greater than the outer diameter $Ds$ of the respective seat 40. The increase suitable for the purposes of the invention is in the range of 1% to 5%. In a particular embodiment, there is an increase of 2.5%, i.e. it is $Dg = 1.025\ Ds$. Such relations refer to the rated diameters as designed. However, the processing tolerances typical of the specific technological field, whereby it can be assumed that the actual outer diameter of the seat 40 equals $\pm 0.03\%$ of the rated diameter as designed, must be taken into account. As regards the emergency seal 20, instead, the typical tolerances may equal $\pm 0.5\%$.

In figure 8, the seal assembly 200 is schematically shown in the disassembled state in order to show separately the emergency seal 20 and the respective seat 40. By contrast, in figures 4, 5 and 6, the seal assembly 200 is shown in the assembled state so as to show in detail the interactions between the emergency seal 20 and the respective seat 40, in the various conditions of use. In particular, figure 6.a shows the emergency seal 20 in the resting configuration, while figure 6.b shows the emergency seal 20 in the working configuration.

As described above, the external diameter $Dg$ of the emergency seal 20 is increased with respect to the outer diameter Ds of the respective seat 40. This feature entails that, once the emergency seal 20 has been correctly housed in the respective seat 40, the emergency seal 20 remains slightly compressed in the radial direction. This ensures that, along the whole circumferential development, the radially outer ends of the appendices 28 remain in contact with the bottom wall 44 of the seat 40 (see, in particular, figure 6.a).

Moreover, as can be seen in particular in figures 6, the axial extension e of the seat 40 is slightly greater than the axial extension a of the main solid portion 26 and is smaller than the overall axial extension d of the whole emergency seal 20. As a result, in assembling the seal assembly 200, it is necessary to slightly compress the appendices 28 in the axial direction in order to house the emergency seal 20 in the respective seat 40. Therefore, while the emergency seal 20 is housed in the seat 40, the elastic reaction of the appendices 28 causes them to press in the axial direction on the side walls 42 of the seat 40.

As can be seen in figure 6.a, the particular shape of the seat 40 and of the radially outer surface 24 of the emergency seal 20 forms an annular chamber 46.

In the seal assembly 200 according to the invention, the emergency seal 20 is free to rotate in its seat 40 around axis X. In particular, the schematic representation in figure 8 shows that there is no shape constraint preventing the rotation of the emergency seal 20 in its seat 40 around axis X. The only mild constraint originates from the friction which is generated between the lateral walls 42 of seat 40 and the appendices 28 due to the elastic thrust exerted by the latter in the axial direction.

As can be seen in the appended figures, the seat 40 comprises at least a duct 48 for feeding a pressure fluid to the annular chamber 46. In a manner known per se, a system for distributing a pressure fluid, typically compressed air, is usually available on watercrafts 18.

The operation of the seal assembly 200 is briefly described in the following.

As already described in connection with the prior art, the use of the seal assembly 200 comprising the emergency seal 20 is necessary when the other service seals 60 are no longer able to perform their task. In this case, there is the danger of a passage of fluids along the drive shaft 50 in the axial direction. In particular, there can be a passage of water from the water side W to the oil side O, or vice versa, a passage of oil from the oil side O to the water side W. Both these scenarios must be avoided. To this end, the emergency seal 20 is thus activated, by leading it from the resting configuration (fig. 6.a) to the working configuration (fig. 6.b). In order to achieve this result, pressure fluid is fed into the annular chamber 46 through the duct 48. Because of the action of the pressure exerted by the fluid, the annular chamber 46 tends to increase its volume, thereby obtaining two effects. A first and main effect is the radial and circumferential compression of the emergency seal 20 which is pushed against the drive shaft 50. See, in particular, figure 6.b. A second, apparently secondary, effect is that the appendices 28 are pressed against the lateral walls 42 of the seat 40 with a force which is significantly greater than the one originating from their own elastic reaction. This way, the fluid sealing is ensured, and the pressure fluid cannot leak out of the annular chamber 46, increasing the efficiency of the first effect.

It should be noted that the particular conformation of the seat 40 forces the emergency seal 20 to deform in a controlled manner. The pressure exerted by the fluid on the radially outer surface 24 presses the radially inner surface 22 on the radially outer surface 52 of the drive shaft 50. The sealing prominences 32 define preferential lines of deformation which facilitate the adhesion to the radially outer surface 52 of the drive shaft 50, improving the sealing against the passage of fluids.

The activation of the seal assembly 200 allows to effectively prevent the undesired passage of fluids in the axial direction along the drive shaft 50. When the emergency seal 20 is in the working configuration, it is free to rotate around the drive shaft 50 and the relative axis X. In particular, the representations of figures 4 to 6 point out that there is no shape constraint preventing the rotation of the emergency seal 20 around the drive shaft 50. The only mild constraint originates from the friction which is generated between the radially outer surface 52 of the drive shaft 50 and the radially inner surface 22 due to the pressure exerted by the latter in the radial direction.

When there is no longer the need to actuate the seal assembly 200, it is sufficient to relieve the pressure of the fluid from the annular chamber 46 for the emergency seal 20 to spontaneously return to its resting configuration.

By virtue of what has been said above, the emergency seal 20 is free to rotate both in its seat 40 and around the drive shaft 50. Thanks to this technical feature, the drive shaft 50 may be put into rotation also with the emergency seal 20 in the working configuration, without this resulting in any problem.

In view of the detailed description of the cross section which has been provided above in connection with figure 7, it will also be evident to the skilled person that the emergency seal 20 according to the invention can keep operating also following a considerable wear. The prominences 32 in contact with the drive shaft 50, indeed, provide a plentiful supply of material subject to wear. This plentiful supply of material subject to wear ensures the proper operation of the emergency seal 20 even in the event of a possible abrasion.

As already stated above, the particular geometry of the seat 40 and of the emergency seal 20 enables the latter to translate in the radial direction, for example for switching from the resting configuration to the working configuration, and vice versa. However, the freedom of the emergency seal 20 to translate in the radial direction in its seat 40 provides also other advantages. For example, it allows that the emergency seal 20, once it has been led into the working configuration, can keep ensuring the sealing even in the event of a slightly eccentric rotation of the drive shaft 50, or in the event of a tilting of the actual axis of rotation with respect to the rated axis of rotation as designed.

With particular reference to figures 5 and 6, in the following a further aspect of the invention is described, according to which the seal assembly 200 is arranged within a sealing package 220.

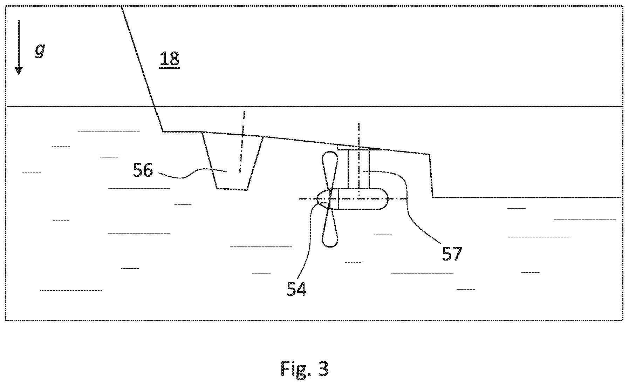

In the example of figure 4, the axis of rotation X of the drive shaft 50 has a substantially horizontal orientation. In this case, the oil side O is placed on the left and the water side *W* is placed on the right. This may be the case of a propeller 54 or a stabilizer fin 55 (see figures 1 and 3). In the example of figure 5, the axis of rotation X of the drive shaft 50 has a substantially vertical orientation. In this case, the oil side O is placed at the top and the water side *W* is placed at the bottom. This may be the case of a rudder 56 or of an azimuth pod 57 (see figures 1 and 3).

The sealing package 220 according to the invention comprises a seal assembly 200 of the type described above and a plurality of service seals 60. Preferably, in the sealing package 220 according to the invention, at least a first service seal 60w is axially next to the emergency seal 20 on a first side, and at least a second service seal 60o is axially next to the emergency seal 20 on a second side axially opposed to the first side with respect to the emergency seal 20. That is, with respect to the emergency seal 20, at least one service seal 60w is placed toward the water side *W* and at least one service seal 60o is placed toward the oil side O.

It should be noted that, in the normal operating life of the watercraft 18, the presence of at least one service seal 60w preserves the emergency seal 20 from direct contact with the external water, thus avoiding the risk of formation of deposits which can impair the operability in case of need.

As the skilled person can easily understand, the invention allows to overcome the drawbacks highlighted above with reference to the prior art. In particular, the present invention provides an emergency seal for a watercraft which allows the proper operation of the submerged movable members on which it acts and therefore the effective management and control of the watercraft.

In addition, the present invention also provides a sealing package wherein the emergency seal is not exposed, during the normal operating life of the watercraft, to the formation of deposits which can potentially impair the operation.

It is clear that the specific features are described in relation to various embodiments of the invention with exemplifying and non-limiting intent. Obviously, a person skilled in the art may make further modifications and variations to this invention, in order to meet contingent and specific requirements. For example, the technical features described in connection with an embodiment of the invention may be extrapolated from it and applied to other embodiments of the invention. Furthermore, such modifications and variations are included within the scope of protection of the invention, as defined by the following claims.

**Claims**

1. Seal assembly (200) comprising:

   an emergency seal (20) for a watercraft (18), comprising a radially inner surface (22) suitable for resting on the radially outer surface (52) of a drive shaft (50) and a radially outer surface (24) suitable for being subjected to the action of a pressure fluid, wherein the emergency seal (20) has a constant cross section along its own circumferential development, wherein the cross section comprises a main solid portion (26) from which two appendices (28) depart which substantially develop outwards in the radial direction, wherein the radially inner surface (22) comprises at least two sealing prominences (32) and wherein the emergency seal (20) is made from an elastomeric material; and
   an apparatus (19) of the watercraft (18) comprising a seat (40) intended to define the passage for said drive shaft (50),
   wherein the emergency seal (20) is housed in the seat (40);
   wherein the emergency seal (20) has an outer diameter *Dg,* and the seat (40) has an outer diameter Ds;
   **characterized in that** the emergency seal (20) is slightly compressed in a radial direction when housed in the seat (40),
   and **in that**, at a disassembled state of the seal assembly (200), *Dg* is larger than Ds in a proportion comprised between 1% and 5%.

2. Seal assembly (200) according to claim 1, wherein:

   - the seat (40) has an axial extension e,
   - the main solid portion (26) of the emergency seal (20) has an axial extension a, and
   - the emergency seal (20) has an overall axial extension d,

   and wherein *a < e < d.*

3. Seal assembly (200) according to claim 1 or 2, wherein the emergency seal (20) is free to rotate in the seat (40) around an axis X.

4. Seal assembly (200) according to one or more of the preceding claims, wherein the elastomeric material is selected in the group comprising: ACM, FKM, CR, NBR, HNBR, SBR, XNBR, AU, EU.

5. Seal assembly (200) according to claim one or more of the preceding claims, having a monolithic structure.

6. Seal assembly (200) according to one or more of the preceding claims, having a mono-material structure.

7. Seal assembly (200) according to one or more of the preceding claims, having a symmetrical cross section with respect to an axial mid plane $\pi$ perpendicular to an axis X.

8. Sealing package (220) comprising a seal assembly (200) according to one or more of the preceding claims, and a plurality of service seals (60).

9. Sealing package (220) according to claim 9, wherein at least a first service seal (60w) is axially next to the emergency seal (20) on a first side (*W*), and at least a second service seal (60$_O$) is axially next to the emergency seal (20) on a second side (*O*) axially opposed to the first side (*W*) with respect to the emergency seal (20).

**Patentansprüche**

1. Dichtungssatz (200) umfassend:

   eine Notdichtung (20) für ein Wasserfahrzeug (18), umfassend eine radiale Innenfläche (22), die geeignet ist, an der radialen Außenfläche (52) einer Antriebswelle (50) zu ruhen, und eine radiale Außenfläche (24), die geeignet ist, der Wirkung einer Druckflüssigkeit ausgesetzt zu werden, wobei die Notdichtung (20) einen konstanten Querschnitt entlang ihres Umfangsverlaufs aufweist, wobei der Querschnitt einen festen Hauptabschnitt (26) umfasst, von dem zwei Fortsätze (28) ausgehen, die im Wesentlichen in radialer Richtung nach außen verlaufen, wobei die radiale Innenfläche (22) mindestens zwei Dichtungsvorwölbungen (32) umfasst und wobei die Notdichtung (20) aus einem Elastomerwerkstoff hergestellt ist; und
   eine Vorrichtung (19) des Wasserfahrzeugs (18), die einen Sitz (40) umfasst, der dazu bestimmt ist, den Durchgang für die genannte Antriebswelle (50) zu definieren,
   wobei die Notdichtung (20) in dem Sitz (40) untergebracht ist;
   wobei die Notdichtung (20) einen Außendurchmesser *Dg* aufweist und der Sitz (40) einen Außendurchmesser *Ds* aufweist;
   **dadurch gekennzeichnet, dass** die Notdichtung (20) in radialer Richtung leicht komprimiert ist, wenn sie in dem Sitz (40) untergebracht ist, und dadurch, dass in einem zerlegten Zustand des Dichtungssatzes (200) *Dg* in einem Verhältnis zwischen 1 % und 5 % größer als *Ds* ist.

2. Dichtungssatz (200) nach Anspruch 1, wobei:

   - der Sitz (40) eine axiale Erstreckung e aufweist,
   - der feste Hauptabschnitt (26) der Notdichtung (20) eine axiale Erstreckung a aufweist und
   - die Notdichtung (20) insgesamt eine axiale Gesamterstreckung d aufweist,
   und wobei *a* < e < d ist.

3. Dichtungssatz (200) nach Anspruch 1 oder 2, wobei die Notdichtung (20) in dem Sitz (40) frei um eine X-Achse drehen kann.

4. Dichtungssatz (200) nach einem oder mehreren der vorangegangenen Ansprüche, wobei der Elastomerwerkstoff ausgewählt wird aus der Gruppe umfassend: ACM, FKM, CR, NBR, HNBR, SBR, XNBR, AU, EU.

5. Dichtungssatz (200) nach einem oder mehreren der vorangegangenen Ansprüche, aufweisend eine monolithische Struktur.

6. Dichtungssatz (200) nach einem oder mehreren der vorangegangenen Ansprüche, aufweisend eine Monomaterialstruktur.

7. Dichtungssatz (200) nach einem oder mehreren der vorangegangenen Ansprüche, aufweisend einen symmetrischen Querschnitt im Verhältnis zu einer axialen Mittelebene $\pi$ senkrecht zu einer Achse *X*.

8. Dichtungspaket (220) umfassend einen Dichtungssatz (200) nach einem oder mehreren der vorangegangenen Ansprüche und eine Vielzahl von Betriebsdichtungen (60).

9. Dichtungspaket (220) nach Anspruch 9, wobei sich mindestens eine erste Betriebsdichtung (60w) axial neben der Notdichtung (20) an einer ersten Seite (IV) befindet und sich mindestens eine zweite Betriebsdichtung (60o) axial neben der Notdichtung (20) an einer zweiten Seite (*O*) befindet, die der ersten Seite (*W*) im Verhältnis zu der Notdichtung (20) axial gegenüberliegt.

**Revendications**

1. Ensemble de joint d'étanchéité (200) comprenant :

   un joint d'étanchéité de secours (20) pour une embarcation (18), comprenant une surface radialement interne (22) adaptée pour reposer sur la surface radialement externe (52) d'un arbre d'entraînement (50) et une surface radialement externe (24) adaptée pour être soumise à l'action d'un fluide sous pression, où le joint d'étanchéité de secours (20) a une section transversale constante le long de son propre développement circonférentiel, où la section transversale comprend une partie solide principale (26) de laquelle deux appendices (28) font saillie, lesquels se développent sensiblement vers l'extérieur dans la direction radiale, où la surface radialement interne (22) comprend au moins deux bourrelets d'étanchéité (32) et où le joint d'étanchéité de secours (20) est constitué d'un matériau élastomère ; et

un appareil (19) de l'embarcation (18) comprenant un siège (40) destiné à définir le passage pour ledit arbre d'entraînement (50),

où le joint d'étanchéité de secours (20) est logé dans le siège (40) ;

où le joint d'étanchéité de secours (20) présente un diamètre externe $Dg$, et le siège (40) présente un diamètre externe $Ds$;

**caractérisé en ce que** le joint d'étanchéité de secours (20) est légèrement pressé dans une direction radiale lorsqu'il est logé dans le siège (40),

et **en ce que**, à l'état démonté de l'ensemble de joint d'étanchéité (200), $Dg$ est supérieur à $Ds$ dans une proportion comprise entre 1% et 5%.

2. Ensemble de joint d'étanchéité (200) selon la revendication, où :

   - le siège (40) a une extension axiale e,
   - la partie solide principale (26) du joint d'étanchéité de secours (20) a une extension axiale $a$, et
   - le joint d'étanchéité de secours (20) a une extension axiale globale $d$,
   et où $a < e < d.$

3. Ensemble de joint d'étanchéité (200) selon la revendication 1 ou 2, où le joint d'étanchéité de secours (20) est libre de pivoter dans le siège (40) autour d'un axe X.

4. Ensemble de joint d'étanchéité (200) selon une ou plusieurs des revendications précédentes, où le matériau élastomère est sélectionné dans le groupe comprenant : ACM, FKM, CR, NBR, HNBR, SBR, XNBR, AU, EU.

5. Ensemble de joint d'étanchéité (200) selon une ou plusieurs des revendications précédentes, ayant une structure monolithique.

6. Ensemble de joint d'étanchéité (200) selon une ou plusieurs des revendications précédentes, ayant une structure constituée d'un seul matériau.

7. Ensemble de joint d'étanchéité (200) selon une ou plusieurs des revendications précédentes, ayant une section transversale symétrique par rapport à un plan médian axial π perpendiculaire à un axe X.

8. Emballage de scellage (220) comprenant un ensemble de joint d'étanchéité (200) selon une ou plusieurs des revendications précédentes, et une pluralité de joints d'étanchéité de service (60).

9. Emballage de scellage (220) selon la revendication 9, où au moins un premier joint d'étanchéité de service (60w) est axialement près du joint d'étanchéité de secours (20) sur un premier côté ($W$), et au moins un second joint d'étanchéité de service (60o) est axialement près du joint d'étanchéité de secours (20) sur un second côté (O) axialement opposé au premier côté ($W$) par rapport au joint d'étanchéité de secours (20).

Fig. 1

*g*

*O*

$60_O$

$60_W$

220

48

19

61

52

*W*

X

X

50

54

Fig. 2

PRIOR ART

Fig. 3

Fig. 5

Fig. 4

Fig. 6.b

Fig. 6.a

Fig. 8

Fig. 7

Fig. 9.b

Fig. 9.a

**EP 3 781 847 B1**

**REFERENCES CITED IN THE DESCRIPTION**

**Patent documents cited in the description**

- JP S60127164 U
- US 2761709 A
- FR 2598769 A1
- US 4534569 A
- US 4676531 A
- US 4541638 A